(19)

Europäisches
Patentamt
European
Patent Office
Office européen
des brevets

(11) **EP 4 471 926 A1**

(12) **EUROPEAN PATENT APPLICATION**
published in accordance with Art. 153(4) EPC

(43) Date of publication:
**04.12.2024 Bulletin 2024/49**

(21) Application number: **22950734.8**

(22) Date of filing: **15.07.2022**

(51) International Patent Classification (IPC):
**H01M 10/0587** (2010.01)

(52) Cooperative Patent Classification (CPC):
**H01M 10/0587;** Y02E 60/10

(86) International application number:
**PCT/CN2022/106071**

(87) International publication number:
**WO 2024/011616 (18.01.2024 Gazette 2024/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **CHEN, Huiling
Ningde, Fujian 352100 (CN)**

• **WU, Zeli
Ningde, Fujian 352100 (CN)**
• **HAN, Changlong
Ningde, Fujian 352100 (CN)**
• **GUO, Jie
Ningde, Fujian 352100 (CN)**
• **HUANG, Lei
Ningde, Fujian 352100 (CN)**
• **ZHANG, Cuiping
Ningde, Fujian 352100 (CN)**
• **LIU, Wenhao
Ningde, Fujian 352100 (CN)**

(74) Representative: **Gong, Jinping
CocreateIP
Neumarkterstr. 21
81673 München (DE)**

(54) **SECONDARY BATTERY, BATTERY MODULE, BATTERY PACK AND ELECTRIC DEVICE**

(57)    The present application provides a secondary battery, a battery module, a battery pack, and an electrical device. The secondary battery includes a positive electrode plate, a negative electrode plate comprising a negative electrode active material; and an electrolytic solution including a first additive and a carbonate solvent, and the first additive including a boron-containing lithium salt and an ester additive, which are configured to form a solid electrolyte interface film on the surface of the negative electrode active material, wherein a discharge capacity of the secondary battery is denoted as B1 in Ah, a change in amount of gas production of the secondary battery is denoted as B2 in mL, a mass of the electrolytic solution is denoted as C in g, a reduction potential of the first additive relative to lithium metal is denoted as D (V, vs Li$^+$ | Li), the secondary battery satisfies: $0.5 \leq B2/B1 \leq 5$;    $0.1 \leq C/B1 \leq 100$;    $0.8 \leq D \leq 2$; $10^{-4} \leq A1+A2 \leq 10$. The present application can improve safety performance, cycle performance of secondary batteries and utilization rate of electrolytic solution.

Fig. 1

**Description**

**TECHNICAL FIELD**

The present application relates to the field of batteries, in particular to a secondary battery, a battery module, a battery pack, and an electrical device.

**BACKGROUND**

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools. With increasingly wide use of batteries, requirements for performances of secondary batteries are increasingly stringent.

Upon improving performances of secondary batteries, it is difficult to balance safety performance and cycle performance of the secondary batteries and utilization rate of an electrolytic solution.

**SUMMARY**

The present application is based on the foregoing topic and aims to provide a secondary battery, a battery module, a battery pack, and an electrical device.

A first aspect of the present application provides a secondary battery, said secondary battery comprising a positive electrode plate, a negative electrode plate and an electrolytic solution; the negative electrode plate comprising a negative electrode active material; the electrolytic solution comprising a first additive and a carbonate solvent, and the first additive comprising a boron-containing lithium salt and an ester additive, which are configured to form a solid electrolyte interface film on the surface of the negative electrode active material, wherein a discharge capacity of the secondary battery is denoted as B1 in Ah, a gas production change rate of the secondary battery is denoted as B2 in mL, a mass of the electrolytic solution is denoted as C in g, a reduction potential of the first additive relative to lithium metal is denoted as D in V vs Li$^+$ | Li, a mass percentage of the boron-containing lithium salt relative to a total mass of the electrolytic solution is denoted as A1%; a mass percentage of the ester additive relative to the total mass of the electrolytic solution is denoted as A2, and the secondary battery satisfies: $0.5 \leq B2/B1 \leq 5$ ; $0.1 \leq C/B1 \leq 100$; $0.8 \leq D \leq 2$; $10^{-4} \leq A1+A2 \leq 10$.

As a result, by comprehensively regulating the discharge capacity of the secondary battery, the gas production, the injection amount, the reduction potential of the boron-containing lithium salt and the ester additive so as to satisfy the above formula, it is possible to ensure that components in the electrolytic solution form a stable SEI film on the surface of the negative electrode active material, and decomposition degree of the carbonate solvent in the electrolytic solution is small so that its gas production is within the controllable range, which can ensure safety performance of the secondary battery; and it is possible to ensure that metal ions migrate smoothly, so as to ensure cycle performance of the secondary battery. And the utilization rate of the electrolytic solution is relatively high due to a low risk of side reactions in the electrolytic solution.

In any embodiment, the secondary battery satisfies at least one of conditions (1) through (4):

$$(1)\ 1 \leq B2/B1 \leq 5;$$

$$(2)\ 1 \leq C/B1 \leq 5;$$

$$(3)\ 0.85 \leq D \leq 2;$$

$$(4)\ 3 \leq A1 + A2 \leq 10$$

It is possible to regulate a ratio of the gas production change rate of the electrolytic solution and the discharge capacity of the secondary battery to satisfy $1 \leq B2/B1 \leq 5$, so that the secondary battery can be guaranteed to exert its capacity fully while guaranteeing a relatively safe internal pressure within the secondary battery.

It is possible to regulate a ratio of the mass of the electrolytic solution and the discharge capacity of the secondary battery to satisfy $1 \leq C/B1 \leq 5$, so that the secondary battery can be guaranteed to exert its capacity fully while guaranteeing the utilization rate of the electrolytic solution.

It is possible to adjust the reduction potential of the first additive with respect to lithium metal to satisfy $0.85 \leq D \leq 2$,

so that the speed of film formation of the first additive on the negative electrode active material and the structural stability of the SEI film formed therefrom can be adjusted.

It is possible to adjust the combination amount of the boron-containing lithium salt and the ester additive to satisfy $3 \leq A1 + A2 \leq 10$, so as to adjust structural stability of the SEI film formed thereon on the surface of the negative electrode active material, and so as to ensure a lower impedance of the SEI film, which is conducive to improving a low-temperature performance of the secondary battery.

In any embodiment, the reduction potential of the boron-containing lithium salt relative to the lithium metal, denoted as D1 (V, vs Li$^+$|Li), satisfies $0.85 \leq D1 \leq 2$; optionally, $0.85 \leq D1 \leq 1.8$; and/or the reduction potential of the ester additive relative to the lithium metal, denoted as D2 (V, vs Li$^+$|Li), satisfies $0.85 \leq D2 \leq 2$; optionally, $0.85 \leq D2 \leq 1.2$.

When D1 is in the above range, the reduction potential of the boron-containing lithium salt is relatively high, which is more favorable for the boron-containing lithium salt to rapidly form a film on the surface of the negative electrode active material, thereby further reducing the risk of decomposition of the carbonate solvent.

When D2 is in the above range, the reduction potential of the ester additive is relatively low, and it can cooperate with the boron-containing lithium salt to form a film on the surface of the negative electrode active material, which is favorable to improving structural stability of the SEI film.

In any embodiment, the boron-containing lithium salt has a molecular formula of $LiBF_aO_bC_cP_d$, in which $0 \leq a \leq 4$, $0 \leq b \leq 8$, $0 \leq c \leq 4$, $0 \leq d \leq 4$.

The B atom may combine with an oxygen-containing oxalate ligand, and the combined product has excellent thermal stability and easily forms an SEI film with excellent performance on the surface of the negative electrode active material, thereby ensuring structural stability of the negative electrode active material and then improving cycle performance of the secondary battery.

In any embodiment, the boron-containing lithium salt includes one or more of lithium tetrafluoroborate $LiBF_4$, lithium bisoxalate borate LiBOB, and lithium bifluorooxalate borate LiDFOB.

When the secondary battery of the present application comprises the above-described boron-containing lithium salt, a SEI film with a stable structure and a relatively small impedance can be formed on the surface of the negative electrode active material, so that the high and low temperature performance of the secondary battery can be improved. Moreover, the above-described boron-containing lithium salt has a higher reduction potential relative to lithium metal, which is favorable to preferentially forming a film on the surface of the negative electrode active material, and thus decomposition of the carbonate solvent can be reduced.

In any embodiment, the electrolytic solution further comprises an ion-conducting lithium salt, and the ion-conducting lithium salt comprises one or more of lithium hexafluorophosphate $LiPF_6$, lithium difluorophosphate $LiPO_2F_2$, lithium difluorobisoxalate phosphate LiDODFP, lithium tetrafluorooxalate phosphate LiDFBP, lithium bisfluorosulfonylimide LiFSI, lithium bis(trifluoromethylsulfonyl)imide LiTFSI, lithium fluorosulfonate $LiFSO_3$, lithium bis(trifluoromethylsulfonyl)imide LiTFSI, lithium nitrate $LiNO_3$, lithium perchlorate $LiClO_4$, lithium hexafluoroantimonate $LiSbF_6$, and lithium hexafluoroarsenate $LiAsF_6$. The lithium ion-conducting salt has a relatively high dissociation degree and a high conductivity, which facilitates migration of lithium ions.

In any embodiment, based on the total mass of the electrolytic solution, a mass percentage of the ion-conducting lithium salt is denoted as A3%, and the secondary battery satisfies: $5 \leq A3 \leq 25$; optionally, $10 \leq A3 \leq 20$.

When the mass percentage of the ion-conducting lithium salt is in the above range, it is possible to ensure conductivity of the electrolytic solution, and it is used in conjunction with the boron-containing lithium salt and the ester additive, which is conducive to providing the negative electrode active material with good protection, and stability of the electrolytic solution can be guaranteed, and the utilization rate of the electrolytic solution can be improved.

In any embodiment, the carbonate solvent comprises: a cyclic carbonate solvent, a mass percentage of which relative to the total mass of the electrolytic solution is denoted as A4%; a linear carbonate solvent, a mass percentage of which relative to the total mass of the electrolyte is denoted as A5%, and the secondary battery satisfies: $1 \leq A5/A4 \leq 10$; optionally, $5 \leq A4 \leq 50$; and/or $50 \leq A5 \leq 70$.

The cyclic carbonate solvent has a strong dielectric constant, which can dissolve lithium salts to a greater extent, making it easier to dissociate lithium ions from the lithium salts, and improving conductivity of the electrolytic solution; the linear carbonate solvent has a relatively low viscosity, which can improve migration rate of lithium ions; the present application can balance the conductivity of the electrolytic solution and the migration rate of lithium ions by adjusting the ratio of the cyclic carbonate solvent and the linear carbonate solvent to satisfy the above range, thereby further improving cycle performance of the secondary battery.

In any embodiment, the cyclic carbonate solvent comprises one or more of ethylene carbonate EC, propylene carbonate PC, vinylene carbonate VC, fluoroethylene carbonate FEC, difluoroethylene carbonate DFEC, vinyl ethylene carbonate VEC, and dicaprylyl carbonate CC; and/or the linear carbonate solvent comprises one or more allyl ethyl carbonate AEC, diphenyl carbonate DPC, and methyl allyl carbonate MAC, polycarbonate VA, diethyl carbonate DEC, methyl ethyl carbonate EMC, methyl propyl carbonate MPC, ethyl propyl carbonate EPC, methyl butyl carbonate MBC, methyl acetate MA, ethyl acetate EA, methyl propionate MP, and ethyl propionate EP.

In any embodiment, the positive electrode plate comprises a positive electrode active material, and the positive electrode active material has a molecular formula of $LiNi_xCo_yMn_zM_{1-x-y-z}O_2$ or $LiNi_aCo_bAl_cN_{1-a-b-c}O_2$, in which M and N are each independently selected from Co, Ni, Mn, Mg, Cu, Zn, Al, Sn, B, Ga, Cr, Sr, V, and Ti, and $0 \leq y \leq 1$, $0 \leq x < 1$, $0 \leq z \leq 1$, $x+y+z \leq 1$, $0 \leq a \leq 1$, $0 \leq b \leq 1$, $0 \leq c \leq 1$, $a+b+c \leq 1$.

A second aspect of the present application further provides a battery module, including the secondary battery according to any embodiment of the first aspect of the present application.

A third aspect of the present application further provides a battery pack, including the battery module according to the embodiment of the second aspect of the present application.

A fourth aspect of the present application further provides an electrical device, including the secondary battery according to any embodiment of the first aspect of the present application, the battery module according to the embodiment of the second aspect of the present application, or the battery pack according to the embodiment of the third aspect of the present application.

DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of an embodiment of a secondary battery of the present application.

Fig. 2 is an exploded schematic diagram of an embodiment of the secondary battery in Fig. 1.

Fig. 3 is a schematic diagram of an embodiment of a battery module of the present application.

Fig. 4 is a schematic diagram of an embodiment of a battery pack of the present application.

Fig. 5 is an exploded schematic diagram of an embodiment of the battery pack shown in Fig. 4.

Fig. 6 is a schematic diagram of an embodiment of an electrical device including the secondary battery of the present application as a power source.

The drawings are not drawn to actual scale.

Reference numerals are as follows:

1. Battery pack; 2. Upper box body; 3. Lower box body; 4. Battery module;

5. Secondary battery; 51. Housing; 52. Electrode assembly;

53. Cover plate; and

6. Electrical device.

**DETAILED DESCRIPTION**

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition wording such as "comprise", "comprising", "contain" and "containing" mentioned in the present application indicates an open-ended mode, but it can also be interpreted as a close-end mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

Secondary batteries are widely used because they have characteristics such as high capacity and long life; as the application range of secondary batteries becomes more and more extensive, requirements for the performance of secondary batteries are gradually improved. An electrolytic solution is an important component of secondary batteries, which functions to conduct metal ions between a positive electrode plate and a negative electrode plate. The electrolytic solution usually includes a lithium salt and an organic additive. In order to improve solubility of the lithium salt, the organic additive is usually required to have a relatively high dielectric constant; in order to facilitate migration of lithium ions, the organic additive is usually required to have a relatively low viscosity; a carbonate solvent can usually satisfy the high dielectric constant, but also meet the requirement of low-viscosity; therefore, it is usually used as an additive for electrolytic solution. However, at high voltage, the carbonate solvent in the electrolytic solution is prone to reduction and decomposition, generating gas, and the residual water in the electrolytic solution will decompose during the charging process, generating hydrogen. The decomposition of the electrolytic solution will lead to gas production in the secondary battery during the cycling process, which will not only lead to bulging of the secondary battery, resulting in a safety risk, but also lead to a poor fit between the positive and negative electrode plates of the secondary battery, resulting in the performance degradation of the secondary battery. In addition, the electrolytic solution will continue to decompose, leading to degradation of the secondary battery performance. In addition, as the electrolytic solution continues to decompose, it may also lead to a decrease in utilization rate of the electrolytic solution.

In view of this, the inventor has conducted an in-depth study of the secondary battery, and has found that when the discharge capacity of the secondary battery, the amount of gas production, and the mass of the electrolytic solution as well as the composition of the electrolytic solution satisfy a specific relationship, it is possible to balance the safety performance and cycle performance of the secondary battery while ensuring the utilization rate of the electrolytic solution. The technical solution is described in detail next.

**Secondary battery**

In a first aspect, the present application provides a secondary battery; the secondary battery comprising a positive electrode plate, a negative electrode plate and an electrolytic solution; the negative electrode plate comprising a negative electrode active material; the electrolytic solution comprising a first additive and a carbonate solvent, and the first additive comprising a boron-containing lithium salt and an ester additive, and being configured to form a solid electrolyte interface film on the surface of the negative electrode active material, wherein a discharge capacity of the secondary battery is denoted as $B1$ in Ah, a change in amount of gas production of the secondary battery is denoted as $B2$ in mL, a mass of the electrolytic solution is denoted as $C$ in g, a reduction potential of the first additive relative to lithium metal is denoted as $D$ ($V$ vs $Li^+ | Li$), a mass percentage of the boron-containing lithium salt relative to a total mass of the electrolytic solution is denoted as $A1$%; a mass percentage of the ester additive relative to the total mass of the electrolytic solution is denoted as $A2$, and the secondary battery satisfies: $0.5 \leq B2/B1 \leq 5$; $0.1 \leq C/B1 \leq 100$; $0.85 \leq D \leq 2$; $10^{-4} \leq A1+A2 \leq 10$.

Although it is unclear what the mechanism is, the secondary battery of the present application can balance safety performance and cycle performance of the secondary battery, and can ensure utilization rate of an electrolytic solution.

The inventor speculates that the mechanism of the present application is as follows: the boron-containing lithium salt and the ester additive, as a negative electrode film-forming additive, can form a film on the surface of the negative electrode active material, play a certain passivation effect on the surface of the negative electrode active material, and protect the structural stability of the negative electrode active material.

The boron-containing lithium salt and the ester additive together constitute the first additive, and the first additive has a relatively high reduction potential compared to lithium metal, and the first additive is superior to the carbonate ester solvent to form a Solid Electrolyte Interphase (SEI) film on the surface of the negative electrode active material in the formation of the secondary battery, and is capable of reducing the risk of continuous decomposition of the carbonate solvent to form a film on the surface of the negative electrode active material, hindering further decomposition of a solvent, maintaining interfacial stability of the negative electrode active material, while ensuring stability of the carbonate solvent in the electrolytic solution, which can improve the utilization rate of the electrolyte. In addition, as decomposition degree of the electrolytic solution is reduced, the risk of gas production in the electrolytic solution is reduced, so that the internal pressure in the secondary battery is within a safe pressure range, and thus safety performance of the secondary battery can be improved. Moreover, as decomposition degree of the electrolytic solution is reduced, it is possible to ensure that metal ions, such as lithium ions, migrate smoothly, and thus ensure the cycle performance of the secondary battery.

The boron-containing lithium salt and the ester additive together form a SEI film, and the formed SEI film has a more complicated composition and a more stable structure and the formed SEI film has a lower impedance, which is conducive to migration of lithium ions.

The organic solvent in the electrolytic solution generally include a cyclic carbonate solvent and a linear carbonate solvent, in which the cyclic carbonate solvent is capable of providing a higher dielectric constant for the electrolytic solution, promoting metal ions such as lithium ions to dissociate, which is conducive to improving ionic conductivity of the electrolytic solution; and the linear carbonate solvent is capable of providing a relatively low viscosity, which is conducive to migration of metal ions such as lithium ions.

Regulating the ratio of the mass of the electrolytic solution and the discharge capacity of the secondary battery within the above range can ensure that the secondary battery exerts its capacity on the basis of ensuring utilization rate of the electrolytic solution.

By jointly regulating the discharge capacity of the secondary battery, the gas production, the injection amount, the reduction potential of the boron-containing lithium salt, and the content of the boron-containing lithium salt and the ester additives to meet the above formulae, it is possible to ensure that components in the electrolytic solution can form a stable SEI film on the surface of the negative electrode active material, and that decomposition degree of the carbonate solvent in the electrolytic solution is small, and that the gas production is within a controlled range, which can ensure safety performance of the secondary battery; and it is possible to ensure that metal ions migrate smoothly, thus ensuring the cycle performance of the secondary battery. Moreover, since the risk of side reaction of the electrolytic solution is small, the utilization rate of the electrolytic solution is relatively high.

In some embodiments, $0.5 \leq B2/B1 \leq 5$; optionally, $1 \leq B2/B1 \leq 5$ .

The capacity of the secondary battery can be ensured to be fully utilized by regulating the ratio of the change in amount of gas production of the electrolytic solution to the discharge capacity of the secondary battery within the certain range, while ensuring a relatively safe internal pressure within the secondary battery. By way of examples, B2B 1 may be 0.5, 1, 1.2, 1.5, 1.8, 2, 2.5, 3, 3.5, 4, 4.2, 4.5, or 5; or in a range consisting of any two of the above values.

In some embodiments, $0.01 \leq B1 \leq 500$; the discharge capacity of the secondary battery can meet needs of different scenarios when the discharge capacity is in the above range. Optionally, $2 \leq B1 \leq 300$; by way of examples, the discharge capacity B1 in Ah of the secondary battery may be 0.01 Ah, 0.1 Ah, 0.2 Ah, 0.5 Ah, 1 Ah, 2 Ah, 5 Ah, 10 Ah, 15 Ah, 20 Ah, 50 Ah, 80 Ah, 100 Ah, 200 Ah, 300 Ah, or 500 Ah; or in a range consisting of any two of the above values.

In the present application, the discharge capacity B1 in Ah of a secondary battery refers to a capacity value of the secondary battery measured by setting the corresponding current and voltage of the secondary battery by a constant-current charge/discharge tester at room temperature, which may be determined by the method and instrument known in the art. Taking a ternary material as an example, a discharge capacity of a secondary battery is tested by putting the secondary battery on a constant-current charge/discharge tester at a test temperature of 25°C, with the following test process. First, the secondary battery is charged at a certain rate of 0.05C (0.05C is a current value for discharging the whole capacity of the secondary battery for 20h) to an upper limit voltage of the finished battery (generally 4.2-4.5V for the ternary material), and then the secondary battery is allowed to stand for 30 minutes and afterwards is discharged to a lower limit voltage of the finished battery (generally 2.5V for the ternary material) at a rate of 0.05C. The measured discharge capacity is the discharge capacity B1 in Ah of the secondary battery.

In some embodiments, $0.1 \leq B2 \leq 2000$. When the change in amount of gas production of the secondary battery is in the above range, it is possible to ensure that the change in air pressure within the secondary battery is not too large, and the secondary battery does not undergo over-expansion, thereby ensuring the safety performance of the secondary

battery. Optionally, $1 \leq B2 \leq 1000$. By way of examples, the change in amount of gas production of the secondary battery may be 0.1, 1, 2, 5, 10, 15, 20, 25, 30, 35, 50, 80, 100, 200, 300, 400, 500, 600, 700, 800, 1000, 1200, 1500, 1600, 1700, 1800 or 2000.

In the present application, the change in amount of gas production of the secondary battery has the meaning commonly known in the art and can be determined using methods and instruments known in the art. When the secondary battery is a square-case battery, a CDK fuel gauge (brand: CDK, model: PPX-R10NH-6m-KA) is inserted at a liquid injection hole of the secondary battery, and the instrument displays the value of the pressure parameter and the amount of gas production of the secondary battery, in a pressure MPa (by the ideal gas equation PV=nRT, the amount of gas production is positively correlated with the pressure). When the secondary battery tested is a soft pack battery, the change in amount of gas production within the soft pack battery is tested by a balance, with the following specific operation. First, 1.8L of deionized water is added to a beaker with a volume of 2L and the beaker loaded with water is placed to a balance to balance the tare weight, a jig of an iron support is used to clamp the terminal end of the negative electrode of the soft pack battery, so that the secondary battery is completely immersed in water (drainage method), and the balance reading at the moment is recorded as the volume (in mL) of the initial secondary battery. Then the soft pack battery is charged at 0.33C to 100% SOC at 25°C, and is full discharged to test its actual capacity in Ah. Finally the fully charged soft pack battery is placed at a 70°C high temperature oven for 5 days (5D), and the volume of the stored secondary battery in mL is tested using the drainage method, and the change in volume after storage at 70°C (mL/Ah) = (Volume of the secondary battery after storage for 5D - Volume of the initial secondary battery)/actual capacity.

In some embodiments, $0.1 \leq CB1 \leq 100$; optionally, $1 \leq CB1 \leq 5$.

The capacity of the secondary battery can be ensured to be fully utilized by regulating the ratio of the mass of the electrolytic solution and the discharge capacity of the secondary battery within a certain range, while ensuring the utilization rate of the electrolytic solution. By way of examples, the C/B1 may be 1, 1.2, 1.5, 1.8, 2, 2.5, 3, 3.5, 4, 4.5, or 5; or in a range consisting of any two of the above values.

In some embodiments, $0.01 \leq C \leq 2000$. The mass of the electrolytic solution in the above range enables the secondary battery to exert its capacity fully. Optionally, $1 \leq C \leq 1000$; by way of examples, the mass C in g of the electrolytic solution may be 0.01g, 0.05g, 0.1g, 0.2g, 0.5g, 0.6g, 0.8g, 1g, 2g, 5g, 8g, 10g, 15g, 20g, 30g, 50g, 80g, 100g, 200g, 300g, 500g, 700g, 800g, 1000g, 1500g or 2000g; or in a range consisting of any two of the above values.

In the present application, the mass C in gram of the electrolytic solution is a mass of the electrolytic solution in the finished secondary battery, which is determined as follows. An exemplary method of obtaining the electrolytic solution from the secondary battery comprises the steps in which the secondary battery is discharged to a discharge cut-off voltage (for safety reasons, the battery is generally in a fully discharged state) and centrifuged; then a free electrolytic solution is poured and collected from an injection port of the secondary battery, the remaining battery core components such as the electrode plates and separator are centrifuged at a centrifugation rate of greater than 10000 r/min for the electrolytic solution collection, the electrolytic solution collection by centrifugation is repeated until no visible liquid exists after centrifugation, and the total amount of electrolytic solution collected is a mass C in gram of the electrolytic solution in the finished battery core.

In some embodiments, $0.8 \leq D \leq 2$; optionally, $0.85 \leq D \leq 2$; and further optionally, $0.85 \leq D \leq 1.8$. D denotes the reduction potential of the first additive, and in the case where the first additive comprises a plurality of materials, D may be a range of values as the reduction potentials of the different materials may differ.

The rate of film formation of the first additive on the negative electrode active material, as well as the structural stability of the SEI film formed therefrom, can be adjusted by adjusting the reduction potential of the first additive with respect to lithium metal.

In the present application, the reduction potential of the first additive with respect to lithium metal has a meaning that is well known in the art, and can be determined using the conventional methods and instruments in the art. For example, the test method is as follows: 1% of the first additive is added to a blank electrolytic solution containing only a non-aqueous solvent and a primary lithium salt $LiPF_6$, which is mixed homogeneously; a lithium plate is used as a negative electrode, and a graphite electrode plate is a positive electrode, which are assembled as a button battery. The test results are presented as a dQ/dV - V plot by static activation on a constant current charge/discharge test apparatus at 45°C for 2h, discharging at 200uA to 5mV first, then discharging at 50uA to 5mV, standing for 5min, and charging to 2V using a constant current of 0.1C, wherein Q denotes a discharge capacity of the battery, V denotes a voltage, and dQ/dV denotes differentiation of the discharge capacity of the battery with respect to the voltage. Based on the above graph, the peak position corresponding to the boron-containing lithium salt can be identified, thereby obtaining the reduction potential of the first additive.

In some embodiments, the reduction potential of the boron-containing lithium salt with respect to lithium metal is denoted as D1 (V, vs Li+|Li), $0.8 \leq D1 \leq 2$; optionally, $0.85 \leq D1 \leq 1.8$.

When D1 is in the above range, the reduction potential of the boron-containing lithium salt is relatively high, which is more favorable for the boron-containing lithium salt to rapidly form a film on the surface of the negative electrode active material, thereby further reducing the risk of decomposition of the carbonate solvent. Optionally, $0.85 \leq D1 \leq 2$. By way of examples, D1 may be 0.8, 0.85, 1, 1.2, 1.5, 1.6, 1.7, 1.8, 1.9, or 2; or in a range consisting of any two of the above values.

In some embodiments, the reduction potential of the ester additive with respect to lithium metal is denoted as D2 (V, vs Li+|Li), $0.8 \leq D2 \leq 2$.

When D2 is in the above range, the reduction potential of the ester additive is relatively low, and it can cooperate with the boron-containing lithium salt to form a film on the surface of the negative electrode active material, which is conducive to improving the structural stability of the SEI film. Optionally, $0.8 \leq D2 \leq 1.8$; further optionally, $0.8 \leq D2 \leq 1.2$. By way of examples, D2 may be 0.8, 0.85, 0.9, 1, 1.1, 1.2, 1.3, 1.4, 1.5, 1.6, 1.7, or 1.8; or in a range consisting of any two of the above values.

In some implementations, $10^{-4} \leq A1+A2 \leq 10$; optionally $3 \leq A1+A2 \leq 10$.

It is possible to adjust the combined amount of the boron-containing lithium salt and the ester additive, so as to adjust the structural stability of the SEI film formed therefrom on the surface of the negative electrode active material, and a relatively low impedance of the SEI film can be guaranteed, which is conducive to improving a low temperature performance of the secondary battery. By way of examples, A1+A2 may be $10^{-4}$, $10^{-3}$, $10^{-2}$, 0.1, 0.5, 0.8, 1, 1.2, 1.5, 1.8, 2, 2.2, 2.5, 2.8, 3, 3.5, 4, 4.5, 5, 5.5, 5.8, 6, 6.5, 7, 7.5, 8, 8.5, 9, 9.5, or 10; or in a range consisting of any two of the above values.

In the present application, the method of determining the mass percentage A1% of the boron-containing lithium salt and the mass percentage A2% of the ester additive can be determined according to methods known in the art. For example, the determination can be performed by gas chromatography-mass spectrometry (GC-MS), ion chromatography (IC), liquid chromatography (LC), nuclear magnetic resonance spectroscopy (NMR), and the like.

In some embodiments, $10^{-4} \leq A1 \leq 5$. When the mass percentage of the boron-containing lithium salt is in the above range, it is possible to form a stabilized SEI film on the surface of the negative electrode active material, which is also conducive to ensuring conductivity of the electrolytic solution. By way of examples, the mass percentage A1% of the boron-containing lithium salt may be $1 \times 10^{-4}$%, $1.5 \times 10^{-4}$%, $2 \times 10^{-4}$%, $5 \times 10^{-4}$%, $1 \times 10^{-3}$%, $1.5 \times 10^{-3}$%, $2 \times 10^{-3}$%, $5 \times 10^{-3}$%, $1 \times 10^{-2}$%, $5 \times 10^{-2}$%, 0.1%, 0.5%, 0.8%, 1%, 1.5%, 2%, 3%, 4%, or 5%; or in a range consisting of any two of the above values.

In some embodiments, $10^{-4} \leq A2 \leq 5$. The mass percentage of the ester additive in the above range enables the SEI film to have a more complex composition, which is conducive to improving cycle and storage performance of the secondary battery. By way of examples, the mass percentage A2% of the ester additive may be $1 \times 10^{-4}$%, $1.5 \times 10^{-4}$%, $2 \times 10^{-4}$%, $5 \times 10^{-4}$%, $1 \times 10^{-3}$%, $1.5 \times 10^{-3}$%, $2 \times 10^{-3}$%, $5 \times 10^{-3}$%, $1 \times 10^{-2}$%, $5 \times 10^{-2}$%, 0.1%, 0.5%, 0.8%, 1%, 1.5%, 2%, 3%, 4%, 5%, or in a range consisting of any two of these values.

[Electrolytic solution]

The electrolytic solution functions as conducting metal ions between the positive electrode plate and the negative electrode plate, and the electrolytic solution in the present application may be an electrolytic solution commonly known in the art for secondary batteries. The electrolytic solution includes a lithium salt and an organic solvent.

In some embodiments, the lithium salt comprises a boron-containing lithium salt and the boron-containing lithium salt has a molecular formula of $LiBF_aO_bC_cP_d$, where $0 \leq a \leq 4$, $0 \leq b \leq 8$, $0 \leq c < 4$, and $0 \leq d < 4$.

The B atom may combine with an oxygen-containing oxalate ligand, and the combined product has excellent thermal stability and easily forms an SEI film with excellent performance on the surface of the negative electrode active material, thereby ensuring structural stability of the negative electrode active material and then improving cycle performance of the secondary battery. Of course, the B atom may alternatively combine with a halogen atom, especially a fluorine atom, the fluorine atom has a strong electron-withdrawing induction effect and high thermal and chemical stability, and is conducive to the improvement of migration number of lithium ions in the electrolytic solution, and to the increase of rate performance of the secondary battery and the decrease of polarization.

As an example, the boron-containing lithium salt includes one or more of lithium tetrafluoroborate ($LiBF_4$), lithium bisoxalate borate ($LiB(C_2O_4)_2$, abbreviated as LiBOB), and lithium difluorooxalate borate ($LiBC_2O_4F_2$, abbreviated as LiDFOB). Further, the boron-containing lithium salt includes a combination of lithium tetrafluoroborate $LiBF_4$, lithium bisoxalate borate ($LiB(C_2O_4)_2$, abbreviated as LiBOB), and lithium difluorooxalate borate ($LiBC_2O_4F_2$, abbreviated as LiDFOB).

When lithium tetrafluoroborate $LiBF_4$ is used with a carbonate solvent or an additive in the electrolytic solution, the system based on lithium tetrafluoroborate $LiBF_4$ has a relatively low viscosity, which is conducive to the release of lithium ions, thereby improving conductivity of the electrolytic solution. The SEI film formed from lithium tetrafluoroborate $LiBF_4$ has a uniform thickness, good dynamics activity, and low charge transfer resistance in the secondary battery, which can significantly improve low-temperature performance of the secondary battery; and the SEI film is less prone to thermal decomposition, has relatively stable performance at high temperatures, and therefore can significantly improve the high-temperature performance of the secondary battery.

Either of lithium bisoxalate borate LiBOB and lithium difluorooxalate borate LiDFOB has a passivation effect on a positive electrode current collector in the positive electrode plate, which can reduce the risk of corrosion of the positive electrode current collector due to side reactions with the positive electrode current collector and improve structural stability of the positive electrode plate. In addition, the electrolytic solution containing lithium bisoxalate borate LiBOB or lithium difluorooxalate borate LiDFOB is less likely to produce acidic substances, which can further reduce the risk of corrosion of the positive electrode current collector. Lithium bisoxalate borate LiBOB and lithium difluorooxalate borate LiDFOB have good compatibility with the positive electrode active material, which is conducive to migration of lithium ions; and LiBOB or LiDFOB can form an effective SEI film on the surface of the negative electrode active material to improve protective performance for the negative electrode active material.

When lithium tetrafluoroborate $LiBF_4$, lithium bisoxalate borate LiBOB and lithium difluorooxalate borate LiDFOB are used together, the SEI film formed from the three has a more complicated composition and a more stable structure; and on the basis of ensuring the structural stability, it is possible to ensure the SEI film to have a relatively small impedance, thereby ensuring the low-temperature performance of the secondary battery.

When the secondary battery of the present application comprises the above lithium salt, a SEI film with a stable structure and a relatively small impedance value can be formed on the surface of the negative electrode active material, thereby improving the high and low temperature performance of the secondary battery. The above-described boron-containing lithium salt has a higher reduction potential with respect to lithium metal, which is favorable for preferentially forming a film on the surface of the negative electrode active material, and thus can reduce decomposition of the carbonate solvent.

In some embodiments, the lithium salt may further comprise an ion-conducting lithium salt, the ion-conducting lithium salt comprising one or more of lithium hexafluorophosphate $LiPF_6$, lithium difluorophosphate $LiPO_2F_2$, lithium difluorobisoxalate phosphate LiDODFP, lithium tetrafluorooxalate phosphate LiDFBP, lithium bisfluorosulfonylimide LiFSI, lithium bis(trifluoromethylsulfonyl)imide LiTFSI, lithium fluorosulfonate $LiFSO_3$, lithium nitrate $LiNO_3$, lithium perchlorate $LiClO_4$, lithium hexafluoroantimonate $LiSbF_6$, and lithium hexafluoroarsenate $LiAsF_6$. The ion-conducting lithium salt has a relatively high dissociation degree and a high conductivity, which facilitates migration of lithium ions.

In some embodiments, based on the total mass of the electrolytic solution, a mass percentage of the ion-conducting lithium salt is denoted as A3%, in which $5 \leq A3 \leq 25$; optionally, $10 \leq A3 \leq 20$.

When the mass percentage of the ion-conducting lithium salt is in the above range, the conductivity of the electrolytic solution can be guaranteed, and its use in combination with the boron-containing lithium salt and the ester additives is conducive to providing good protection to the negative electrode active material and to ensuring stability of the electrolytic solution to increase utilization rate of the electrolytic solution. Optionally, $10 \leq A3 \leq 20$. By way of examples, the mass percentage A3% of the ion-conducting lithium salt may be 5%, 6%, 8%, 10%, 12%, 15%, 16%, 18%, 20%, 21%, 23%, or 25%; or in a range consisting of any two of the above values.

In some embodiments, the ester additive may comprise one or more of ethylene carbonate EC, propylene carbonate PC, vinylidene carbonate VC, fluorinated ethylene carbonate FEC, difluorinated ethylene carbonate DFEC, vinyl ethylene carbonate VEC, and dicaprylyl carbonate CC. Of course, the ester additive may further include a linear carbonate additive and the like. The mass percentage of the ester additive is typically less than or equal to 1%.

In some embodiments, the carbonate solvent may include a cyclic carbonate solvent and a linear carbonate solvent; the mass percentage of the cyclic carbonate solvent with respect to the total mass of the electrolytic solution is denoted as A4%, and the mass percentage of the linear carbonate solvent with respect to the total mass of the electrolytic solution is denoted as A5%, wherein the secondary battery satisfies: $1 \leq A5/A4 \leq 10$.

The cyclic carbonate solvent has a strong dielectric constant, which can dissolve the lithium salt to a greater extent, making it easier to dissociate lithium ions from the lithium salt and improve conductivity of the electrolytic solution; the linear carbonate solvent has a relatively low viscosity, which can improve migration rate of lithium ions. The present application can balance the conductivity of the electrolytic solution and the migration rate of lithium ions by adjusting the cyclic carbonate solvent and the linear carbonate solvent to satisfy the above range, thereby further improving cycle performance of the secondary battery. Optionally, $2 \leq A5/A4 \leq 8$. By way of examples, A5/A4 may be 2, 3, 4, 5, 6, 7, 8, 9, or 10; or in a range consisting of any two of the above values.

In some embodiments, $5 \leq A4 \leq 50$.

The mass percentage of the cyclic carbonate solvent in the above range can further improve conductivity of the electrolytic solution. By way of examples, the mass percentage A4% of the cyclic carbonate solvent is 5%, 6%, 7%, 8%, 9%, 10%, 12%, 15%, 16%, 18%, 20%, 30%, 40%, or 50%; or in a range consisting of any two of the above values.

In some embodiments, $50 \leq A5 \leq 70$.

The mass percentage of the linear carbonate solvent in the above ranges can further improve viscosity of the electrolytic solution, thereby improving migration rate of lithium ions. By way of examples, the mass percentage A5% of the linear carbonate solvent is 50%, 52%, 55%, 56%, 58%, 60%, 62%, 65%, 66%, 68%, or 70%; or in a range consisting of any two of the above values.

In some embodiments, the cyclic carbonate solvent comprises one or more of ethylene carbonate EC, propylene carbonate PC, vinylidene carbonate VC, fluoroethylene carbonate FEC, difluoroethylene carbonate DFEC, vinyl ethylene carbonate VEC, and dicaprylyl carbonate CC. The above cyclic carbonate solvent has higher dielectric constants and is more favorable for dissociation of lithium salts.

In some embodiments, the linear carbonate solvent comprises one or more of allyl ethyl carbonate AEC, diphenyl carbonate DPC, methyl allyl carbonate MAC, polycarbonate VA, diethyl carbonate DEC, methyl ethyl carbonate EMC, methyl propyl carbonate MPC, ethyl propyl carbonate EPC, methyl butyl carbonate MBC, methyl acetate MA, ethyl acetate EA, methyl propionate MP and ethyl propionate EP. The linear carbonate solvent described above has a relatively low viscosity and can further enhance migration rate of lithium ions.

In some embodiments, the electrolytic solution can further comprise a film-forming additive, such as a negative electrode film-forming additive; the negative electrode film-forming additive comprises one or more of a sulfate additive, and a sulfite additive. The negative electrode film-forming additive can form a SEI film on the surface of the negative electrode active material, and the multiple components together forming a film on the surface of the SEI film can enrich film structure of the SEI film and improve structural stability of the SEI film. Further, the negative electrode film-forming additive comprises a sulfate additive and a sulfite additive; the formed SEI film has a complex composition and a higher structural stability and thus can improve storage performance of the negative electrode active material. Of course, a positive electrode film-forming additive can also be added to the electrolytic solution, which can form a film on the surface of the positive electrode active material and provide protection for the positive electrode active material.

The sulfate additive includes a cyclic sulfonate additive and/or a hydrocarbyl sulfate additive. Further, the cyclic sulfonate additive includes one or more of 1,3-propane sultone PS, propene sultone PES, and 3-fluoro-1,3-propane sultone FPS. The hydrocarbyl sulfate additive includes one or more of ethylene sulfate DTD, diethyl sulfate DES, and dimethyl sulfate DMS.

The sulfite additive includes ethylene sulfite ES and/or vinyl ethylene sulfite VES.

The electrolytic solution of the present application can be prepared according to methods conventional in the art. For example, additives, solvents, electrolyte salts and the like can be mixed well to obtain the electrolytic solution. There is no particular limitation on the order of addition of each material. For example, the additives, the electrolyte salts, and the like can be added to the non-aqueous solvent and mixed well to obtain a non-aqueous electrolytic solution.

In the present application, components and their contents in the electrolytic solution can be determined according to methods known in the art. For example, they can be determined by gas chromatography-mass spectrometry (GC-MS), ion chromatography (IC), liquid chromatography (LC), nuclear magnetic resonance spectroscopy (NMR), and the like.

It is to be noted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

[Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

The positive electrode film layer includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes $LiNi_xCo_yMn_zM_{1-x-y-z}O_2$ or $LiNi_aCo_bAl_cN_{1-a-b-c}O_2$, where M and N are any one independently selected from Co, Ni, Mn, Mg, Cu, Zn, Al, Sn, B, Ga, Cr, Sr, V and Ti, $0 \leq y \leq 1$, $0 \leq x < 1$, $0 \leq z \leq 1$, $x+y+z \leq 1$, $0 \leq a \leq 1$, $0 \leq b \leq 1$, $0 \leq c \leq 1$, and $a+b+c \leq 1$. When the secondary battery is subjected to charging and discharging cycles under high voltage conditions, the positive electrode active material described above has a relatively more stable structure. Moreover, when the positive electrode active material is used with the boron-containing lithium salt, B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free cathode active material may be avoided, thereby stabilizing crystal structure of the low-cobalt or cobalt-free cathode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

$LiNi_xCo_yMn_zM_{1-x-y-z}O_2$ or $LiNi_aCo_bAl_cN_{1-a-b-c}O_2$ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an $O_2$ concentration of, for example, 70% to 100%. The sintering temperature and time may be adjusted according to an actual situation.

As an example, the lithium source includes, but is not limited to, at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrogen sulfide, hydrogen sulfide, lithium sulfide, ammonium sulfide, and elemental sulfur.

In some embodiments, based on a total mass of the positive electrode film layer, a layered material with molecular formula $LiNi_xCo_yMn_zM_{1-x-y-z}O_2$ or $LiNi_aCo_bAl_cN_{1-a-b-c}O_2$ has a mass percentage of 80% to 99%. For example, the mass percentage of the layered material with molecular formula $LiNi_xCo_yMn_zM_{1-x-y-z}O_2$ or $LiNi_aCo_bAl_cN_{1-a-b-c}O_2$ may be 80%, 81%, 82%, 83%, 84%, 85%, 86%, 87%, 88%, 89%, 90%, 91%, 92%, 93%, 94%, 95%, 96%, 97%, 98%, 99%, or in a range of any of the above values. Optionally, the mass percentage of the layered material with molecular formula $LiNi_xCo_yMn_zM_{1-x-y-z}O_2$ or $LiNi_aCo_bAl_cN_{1-a-b-c}O_2$ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode film layer may optionally further include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film layer, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Negative electrode plate]

The negative electrode plate includes a negative electrode current collector and a negative electrode film layer disposed on at least one surface of the negative electrode current collector, and the negative electrode film layer includes a negative electrode active material.

As an example, the negative electrolyte current collector has two surfaces opposite in its thickness direction, and the negative electrode film layer is disposed on either or both of the two opposite surfaces of the negative electrolyte current collector.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode film layer may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film layer, the negative electrode binder is present in a mass percentage of 5% or less.

In some embodiments, the negative electrode film layer may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film layer, the negative electrode conductive agent is present in a mass percentage of 5% or less.

In some embodiments, the negative electrode film layer may further optionally include other auxiliaries. As an example, the other auxiliaries may include a thickener, such as carboxymethyl cellulose sodium (CMC-Na) or a PTC thermistor material. In some embodiments, based on the total mass of the negative electrode film layer, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film layer is usually formed by coating the negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a protective layer covering the surface of the negative electrode film layer.

[Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

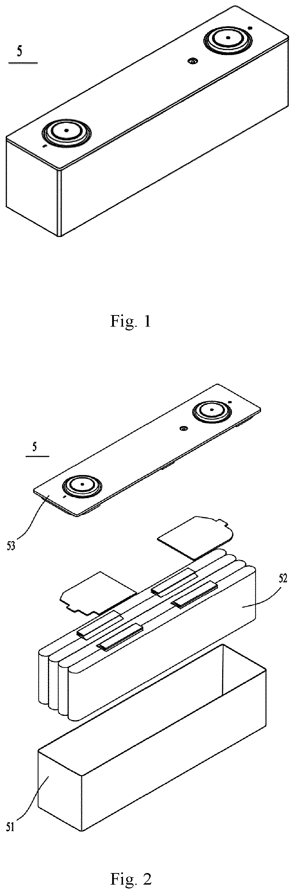

The present application does not have particular limitation to the shape of the secondary battery. The secondary battery may be cylindrical, square, or in other arbitrary shape. Fig. 1 shows a secondary battery 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

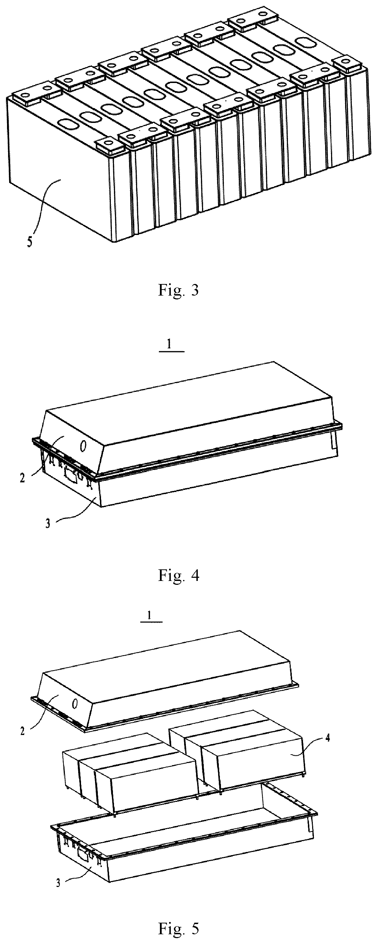

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

Electrical device

In a second aspect, the present application provides an electrical device, which includes at least one of the secondary battery, the battery module, and the battery pack of the present application. The secondary battery, the battery module, and the battery pack may be used as a power source of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

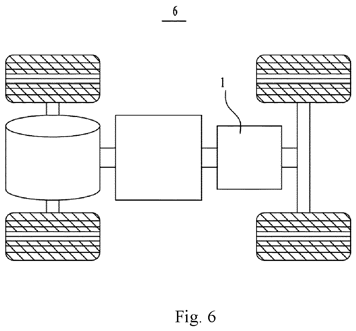

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power source.

## Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

## Example 1

### 1. Manufacturing of a positive electrode plate

An aluminum foil with a thickness of 12 $\mu$m was used as a positive electrode current collector.

A positive electrode active material $LiNi_{0.6}Co_{0.2}Mn_{0.2}O_2$, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrode plate.

### 2. Manufacturing of a negative electrode plate

A copper foil with a thickness of 8 $\mu$m was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2:1.8:1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode plate

### 3. Separator

A porous polyethylene (PE) film was used as the separator.

### 4. Preparation of an electrolytic solution

In an environment with a water content less than 10 ppm, non-aqueous organic solvents including EC, and DEC were mixed at a volume ratio of 1:1 to obtain an electrolyte solvent. Subsequently, the organic solvent was mixed with a first additive to formulate an electrolytic solution with a lithium salt concentration of 1 mol/L wherein a primary lithium salt is $LiPF_6$. EC has a reduction potential of 0.7 (V, Li+ | Li) with respect to metal lithium plate and DEC has a reduction potential of 0.8 (V, Li+ | Li) with respect to metal lithium plate.

### 5. Manufacturing of a secondary battery

The positive electrode plate, the separator, and the negative electrode plate were stacked in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

Example 2

The secondary batteries in Examples 2-1 to 2-2 were manufactured by a similar method to Example 1, with the difference from Example 1 that the type of the boron-containing lithium salt was adjusted in Examples 2-1 to 2-2.
The secondary batteries in Examples 2-3 to 2-4 were manufactured by a similar method to Example 1, with the difference from Example 1 that the type of the ester additive was adjusted in Examples 2-3 to 2-4.

**Example 3**

The secondary batteries in Examples 3-1 to 3-5 were manufactured by a similar method to Example 1, with the difference from Example 1 that the amount of the boron-containing lithium salt was adjusted in Examples 3-1 to 3-5.

**Example 4**

The secondary batteries in Examples 4-1 to 4-4 were manufactured by a similar method to Example 1, with the difference from Example 1 that the amount of the ester additive was adjusted in Examples 4-1 to 4-4.

**Example 5**

The secondary batteries in Examples 5-1 to 5-4 were manufactured by a similar method to Example 1, with the difference from Example 1 that the amount of the ion-conducting lithium salt was adjusted in Examples 5-1 to 5-4.

**Example 6**

The secondary batteries in Examples 6-1 to 6-2 were manufactured by a similar method to Example 1, with the difference from Example 1 that the amount of the ion-conducting lithium salt was adjusted in Examples 6-1 to 6-2.
Data of Examples 1-6 and the comparative examples were shown in Table 1 and Table 2.

Table 1

| No. | Electrolytic solution | | | | | | | | Positive electrode active material |
| | First additive | | | | | | Ion-conducting lithium salt | | |
| | Boron-containing lithium salt | | | Ester additive | | | | | |
| | Type | Mass percenta ge Al% | Reduction potential D1(V,Li$^+$| Li) | Type | Mass percenta ge A2% | Reduction potential D2(V,Li$^+$| Li) | Type | Mass percenta ge A3% | |
|---|---|---|---|---|---|---|---|---|---|
| Example 1 | LiDFO B | 1% | 1.52 | DFE C | 0.1% | 1.13 | LiTFS I | 1% | $LiNi_{0.6}Co_{0.2}Mn_{0.2}O_2$ |
| Example 2-1 | LiBF$_4$ | 1% | 1.1 | DFE C | 0.1% | 1.13 | LiTFS I | 1% | $LiNi_{0.6}Co_{0.2}Mn_{0.2}O_2$ |
| Example 2-2 | LiBOB | 1% | 1.7 | DFE C | 0.1% | 1.13 | LiTFS I | 1% | $LiNi_{0.6}Co_{0.2}Mn_{0.2}O_2$ |
| Example 2-3 | LiDFO B | 1% | 1.52 | VC | 0.1% | 1.15 | LiTFS I | 1% | $LiNi_{0.6}Co_{0.2}Mn_{0.2}O_2$ |
| Example 2-4 | LiDFO B | 1% | 1.52 | FEC | 0.1% | 1.15 | LiTFS I | 1% | $LiNi_{0.6}Co_{0.2}Mn_{0.2}O_2$ |
| Example 3-1 | LiDFO B | 0.01% | 1.51 | DFE C | 0.1% | 1.13 | LiTFS I | 1% | $LiNi_{0.6}Co_{0.2}Mn_{0.2}O_2$ |
| Example 3-2 | LiDFO B | 0.1% | 1.51 | DFE C | 0.1% | 1.13 | LiTFS I | 1% | $LiNi_{0.6}Co_{0.2}Mn_{0.2}O_2$ |
| Example 3-3 | LiDFO B | 1.5% | 1.53 | DFE C | 0.1% | 1.13 | LiTFS I | 1% | $LiNi_{0.6}Co_{0.2}Mn_{0.2}O_2$ |
| Example 3-4 | LiDFO B | 2% | 1.54 | DFE C | 0.1% | 1.13 | LiTFS I | 1% | $LiNi_{0.6}Co_{0.2}Mn_{0.2}O_2$ |
| Example 3-5 | LiDFO B | 5% | 1.58 | DFE C | 0.1% | 1.13 | LiTFS I | 1% | $LiNi_{0.6}Co_{0.2}Mn_{0.2}O_2$ |
| Example 4-1 | LiDFO B | 1% | 1.52 | DFE C | 0.01% | 1.11 | LiTFS I | 1% | $LiNi_{0.6}Co_{0.2}Mn_{0.2}O_2$ |
| Example 4-2 | LiDFO B | 1% | 1.52 | DFE C | 1% | 1.13 | LiTFS I | 1% | $LiNi_{0.6}Co_{0.2}Mn_{0.2}O_2$ |
| Example 4-3 | LiDFO B | 1% | 1.52 | DFE C | 2% | 1.13 | LiTFS I | 1% | $LiNi_{0.6}Co_{0.2}Mn_{0.2}O_2$ |
| Example 4-4 | LiDFO B | 1% | 1.52 | DFE C | 5% | 1.14 | LiTFS I | 1% | $LiNi_{0.6}Co_{0.2}Mn_{0.2}O_2$ |
| Example 5-1 | LiDFO B | 1% | 1.52 | DFE C | 0.1% | 1.1 | LiTFS I | 0 | $LiNi_{0.6}Co_{0.2}Mn_{0.2}O_2$ |
| Example 5-2 | LiDFO B | 1% | 1.52 | DFE C | 0.1% | 1.1 | LiTFS I | 5% | $LiNi_{0.6}Co_{0.2}Mn_{0.2}O_2$ |
| Example 5-3 | LiDFO B | 1% | 1.52 | DFE C | 0.1% | 1.1 | LiTFS I | 10% | $LiNi_{0.6}Co_{0.2}Mn_{0.2}O_2$ |
| Example 5-4 | LiDFO B | 1% | 1.52 | DFE C | 0.1% | 1.1 | LiTFS I | 15% | $LiNi_{0.6}Co_{0.2}Mn_{0.2}O_2$ |
| Example 6-1 | LiDFO B | 1% | 1.52 | DFE C | 0.1% | 1.1 | LiClO$_4$ | 1% | $LiNi_{0.6}Co_{0.2}Mn_{0.2}O_2$ |
| Example 6-2 | LiDFO B | 1% | 1.52 | DFE C | 0.1% | 1.1 | LiPO$_2$F$_2$ | 1% | $LiNi_{0.6}Co_{0.2}Mn_{0.2}O_2$ |
| Comparati ve Example | / | / | / | / | / | / | LiTFS I | 1% | $LiNi_{0.6}Co_{0.2}Mn_{0.2}O_2$ |

Table 2

| No. | Mass of electrolytic solution C in g | Secondary Battery | | | | |
|---|---|---|---|---|---|---|
| | | Discharge capacity B1 in Ah | Change in amount of gas production B2 in mL | B2/B1 | C/B1 | (A1+-A2)% |
| Example 1 | 10 | 3.64 | 10.4 | 2.86 | 2.75 | 1.10% |
| Example 2-1 | 10 | 3.65 | 10.5 | 2.88 | 2.74 | 1.10% |
| Example 2-2 | 10 | 3.63 | 10.9 | 3.00 | 2.75 | 1.10% |
| Example 2-3 | 10 | 3.64 | 9.2 | 2.53 | 2.75 | 1.10% |
| Example 2-4 | 10 | 3.61 | 9.1 | 2.52 | 2.77 | 1.10% |
| Example 3-1 | 10 | 3.63 | 10.2 | 2.81 | 2.75 | 0.11% |
| Example 3-2 | 10 | 3.62 | 10.5 | 2.90 | 2.76 | 0.20% |
| Example 3-3 | 10 | 3.62 | 11.8 | 3.26 | 2.76 | 1.60% |
| Example 3-4 | 10 | 3.58 | 12.6 | 3.52 | 2.79 | 2.10% |
| Example 3-5 | 10 | 3.55 | 14.5 | 4.08 | 2.82 | 5.10% |
| Example 4-1 | 10 | 3.56 | 9.1 | 2.56 | 2.81 | 1.01% |
| Example 4-2 | 10 | 3.58 | 9.8 | 2.74 | 2.79 | 2.00% |
| Example 4-3 | 10 | 3.55 | 11.2 | 3.15 | 2.82 | 3.00% |
| Example 4-4 | 10 | 3.43 | 13.5 | 3.94 | 2.92 | 6.00% |
| Example 5-1 | 10 | 3.71 | 10.5 | 2.83 | 2.70 | 1.10% |
| Example 5-2 | 10 | 3.52 | 9.9 | 2.81 | 2.84 | 1.10% |
| Example 5-3 | 10 | 3.45 | 9.5 | 2.75 | 2.90 | 1.10% |
| Example 5-4 | 10 | 3.31 | 9.2 | 2.78 | 3.02 | 1.10% |
| Example 6-1 | 10 | 3.73 | 10.5 | 2.82 | 2.68 | 1.10% |
| Example 6-2 | 10 | 3.74 | 10.7 | 2.86 | 2.67 | 1.10% |
| Comparative Example | 10 | 2.8 | 19 | 6.79 | 3.57 | 0 |

**Test section**

(1) Normal-temperature cycle performance test of the secondary battery

At 25°C, the secondary battery was charged with a constant current of 1 C to 4.4 V and continuously charged at the constant voltage until the current was 0.05 C, and then the secondary battery was in a fully charged state, at which the charge capacity was recorded as the 1st cycle charge capacity. The secondary battery was allowed to stand for 5 min and then discharged at a constant current of 1 C to 2.8V, and the resulting discharge capacity was recorded as the 1st cycle discharge capacity. This was a charging and discharging cycle. The secondary battery was subjected to the above charging and discharging cycle according to the above method, and the discharge capacity for each cycle was recorded. Capacity retention rate (%) of the secondary battery at 25°C for 600 cycles = the 600th cycle discharge capacity / the 1st cycle discharge capacity× 100%.

2) storage gas production performance test of secondary batteries at 70°C

The safety performance of the secondary battery can be characterized using a high temperature storage gas production performance test of the secondary battery.

Storage gas production performance test method was as follows. At room temperature of 25°C, the volume of the finished soft pack battery cell was tested by the drainage method, which was recorded as an initial volume in mL. Then the capacity test was carried out. The battery was left to stand at 70°C for 6h. The secondary battery was charged to 4.4V at a constant current of 1C, and was further charged at the constant voltage to a current of 0.05C. At that moment, the discharge capacity was recorded as an actual capacity of the secondary battery, in Ah. Subsequently, the soft pack secondary battery was charged at 0.33C to 4.4V. The secondary battery was placed into a 60 °C thermostat, and stored for 5 days and then was taken out. At the moment, the drainage method was used to test the volume of the secondary battery, recorded as the volume after storage for 5D in mL. The change in volume of the secondary battery after storage at 70°C in mL/Ah = (volume after storage for 5D - initial volume)/actual capacity.

(3) Test of utilization rate of electrolytic solution

The mass of the electrolytic solution of the secondary battery after cycling at 25°C was determined as follows. The finished secondary battery was charged and discharged at 25°C for 10 cycles at a constant current of 0.33C, and then was left to stand for 5 min. The secondary battery was discharged to a discharge cut-off voltage (for safety reasons, the secondary battery was generally left in a fully discharged state) and then centrifuged to pour and collect the free electrolytic solution out of the injection hole, and then the remaining electrode plates, separator and other battery cell components were centrifuged at a centrifugal speed of more than 10,000 rpm for the electrolytic solution collection. The electrolytic solution collection by centrifugation was repeated until no obvious liquid existed after centrifugation, and the total amount of electrolytic solution collected was the remaining electrolytic solution mass of the battery cell in g. The utilization rate in the amount of electrolytic solution in g=the remaining electrolytic solution mass of the battery cell/the mass of the finished battery cell × 100%.

**Test results**

The performances of the secondary battery were improved as shown in Table 3.

Table 3

| No. | Cycle performance at 25°C | Utilization rate of electrolytic solution in % |
|---|---|---|
| Example 1 | 90.1% | 66% |
| Example 2-1 | 90.1% | 68% |
| Example 2-2 | 90.0% | 64% |
| Example 2-3 | 87.8% | 60% |
| Example 2-4 | 87.5% | 61% |
| Example 3-1 | 85.7% | 65% |
| Example 3-2 | 88.2% | 68% |
| Example 3-3 | 90.2% | 69% |
| Example 3-4 | 89.7% | 64% |
| Example 3-5 | 85.2% | 60% |
| Example 4-1 | 86.3% | 62% |
| Example 4-2 | 88.1% | 61% |
| Example 4-3 | 87.3% | 60% |
| Example 4-4 | 85.3% | 58% |
| Example 5-1 | 84.2% | 70% |
| Example 5-2 | 93.2% | 69% |
| Example 5-3 | 90.2% | 68% |
| Example 5-4 | 85.1% | 64% |
| Example 6-1 | 92.1% | 72% |
| Example 6-2 | 92.8% | 75% |
| Comparative Examples | 72.1% | 45% |

As can be seen from Table 3, in the Comparative Example where neither boron-containing lithium salt nor ester additive was added, the overall performance of its secondary battery was relatively poor, especially its cycle performance and safety performance.

In the examples of the present application, the cycle performance and gas production of the secondary battery can be significantly improved by regulating the type and amount of the boron-containing lithium salt; or the type and amount of the ester additive to satisfy the formulas: $0.5 \leq B2B1 \leq 5$; $0.1 \leq C/B1 \leq 100$; $0.8 \leq D \leq 2$; and $10\text{-}4 \leq A1 + A2 \leq 10$. The performances of the secondary battery can be further improved by adding an ion-conducting lithium salt to the electrolytic solution.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A secondary battery, comprising

    a positive electrode plate,
    a negative electrode plate comprising a negative electrode active material; and
    an electrolytic solution comprising a first additive and a carbonate solvent, and the first additive comprising a boron-containing lithium salt and an ester additive, which are configured to form a solid electrolyte interface film on the surface of the negative electrode active material,
    wherein
    a discharge capacity of the secondary battery is denoted as B1 in Ah,
    a change in amount of gas production of the secondary battery is denoted as B2 in mL,
    a mass of the electrolytic solution is denoted as C in g,
    a reduction potential of the first additive relative to lithium metal is denoted as D (V, vs $Li^+$ | Li),
    a mass percentage of the boron-containing lithium salt relative to a total mass of the electrolytic solution is denoted as A1%; a mass percentage of the ester additive relative to the total mass of the electrolytic solution is denoted as A2, and
    the secondary battery satisfies: $0.5 \leq B2/B1 \leq 5$; $0.1 \leq C/B1 \leq 100$; $0.8 \leq D \leq 2$; $10^{-4} \leq A1+A2 \leq 10$.

2. The secondary battery as claimed in claim 1, wherein the secondary battery satisfies at least one of conditions (1) through (4):

$$(1)\ 1 \leq B2/B1 \leq 5;$$

$$(2)\ 1 \leq C/B1 \leq 5;$$

$$(3)\ 0.85 \leq D \leq 2;$$

$$(4)\ 3 \leq A1 + A2 \leq 10$$

3. The secondary battery as claimed in claim 1 or 2, wherein a reduction potential of the boron-containing lithium salt with respect to lithium metal, denoted as D1 (V, vs $Li^+$|Li), satisfies $0.85 \leq D1 \leq 2$; optionally, $0.85 \leq D1 \leq 1.8$; and/or
    a reduction potential of the ester additive with respect to lithium metal, denoted as D2 (V, vs $Li^+$|Li), satisfies $0.85 \leq D2 \leq 2$; optionally, $0.85 \leq D2 \leq 1.2$.

4. The secondary battery as claimed in any one of claims 1 to 3, wherein the boron-containing lithium salt has a molecular formula of $LiBF_aO_bC_cP_d$, in which $0 \leq a \leq 4$, $0 \leq b \leq 8$, $0 \leq c \leq 4$, $0 \leq d \leq 4$.

5. The secondary battery as claimed in claim 4, wherein the boron-containing lithium salt includes one or more of lithium tetrafluoroborate $LiBF_4$, lithium bisoxalate borate LiBOB, and lithium bifluorooxalate borate LiDFOB.

6. The secondary battery as claimed in any one of claims 1 to 5, wherein the electrolytic solution further comprises an ion-conducting lithium salt, and the ion-conducting lithium salt comprises one or more of lithium hexafluorophosphate $LiPF_6$, lithium difluorophosphate $LiPO_2F_2$, lithium difluorobisoxalate phosphate LiDODFP, lithium tetrafluorooxalate phosphate LiDFBP, lithium bisfluorosulfonylimide LiFSI, lithium bis(trifluoromethylsulfonyl)imide LiTFSI, lithium fluorosulfonate $LiFSO_3$, lithium bis(trifluoromethylsulfonyl)imide LiTFSI, lithium nitrate $LiNO_3$, lithium perchlorate $LiClO_4$, lithium hexafluoroantimonate $LiSbF_6$, and lithium hexafluoroarsenate $LiAsF_6$.

7. The secondary battery as claimed in claim 6, wherein

    based on the total mass of the electrolytic solution, a mass percentage of the ion-conducting lithium salt is denoted as A3%, and
    the secondary battery satisfies: $5 \leq A3 \leq 25$; optionally, $10 \leq A3 \leq 20$.

8. The secondary battery as claimed in any one of claims 1 to 7, wherein the carbonate solvent comprises:

    a cyclic carbonate solvent, a mass percentage of which relative to the total mass of the electrolytic solution is denoted as A4%;
    a linear carbonate solvent, a mass percentage of which relative to the total mass of the electrolyte is denoted as A5%, and
    the secondary battery satisfies: $1 \leq A5/A4 \leq 10$; optionally, $5 \leq A4 \leq 50$; and/or $50 \leq A5 \leq 70$.

9. The secondary battery as claimed in claim 8, wherein

    the cyclic carbonate solvent comprises one or more of ethylene carbonate EC, propylene carbonate PC, vinylene carbonate VC, fluoroethylene carbonate FEC, difluoroethylene carbonate DFEC, vinyl ethylene carbonate VEC, and dicaprylyl carbonate CC; and/or
    the linear carbonate solvent comprises one or more allyl ethyl carbonate AEC, diphenyl carbonate DPC, and methyl allyl carbonate MAC, polycarbonate VA, diethyl carbonate DEC, methyl ethyl carbonate EMC, methyl propyl carbonate MPC, ethyl propyl carbonate EPC, methyl butyl carbonate MBC, methyl acetate MA, ethyl acetate EA, methyl propionate MP, and ethyl propionate EP.

10. The secondary battery as claimed in any one of claims 1 to 9, wherein the positive electrode plate comprises a positive electrode active material, and the positive electrode active material has a molecular formula of $LiNi_xCo_yMn_zM_{1-x-y-z}O_2$ or $LiNi_aCo_bAl_cN_{1-a-b-c}O_2$, in which M and N are each independently selected from Co, Ni, Mn, Mg, Cu, Zn, Al, Sn, B, Ga, Cr, Sr, V, and Ti, and $0 \leq y \leq 1$, $0 \leq x < 1$, $0 \leq z \leq 1$, $x+y+z \leq 1$, $0 \leq a \leq 1$, $0 \leq b \leq 1$, $0 \leq c \leq 1$, $a+b+c \leq 1$.

11. A battery module, comprising the secondary battery according to any one of claims 1 to 10.

12. A battery pack, comprising the battery module according to claim 11.

13. An electrical device, comprising the secondary battery according to any one of claims 1 to 10, the battery module according to claim 11, or the battery pack according to claim 12.

5

Fig. 1

5

53

52

51

Fig. 2

Fig. 3

Fig. 4

Fig. 5

Fig. 6

## INTERNATIONAL SEARCH REPORT

International application No.

**PCT/CN2022/106071**

### A. CLASSIFICATION OF SUBJECT MATTER

H01M 10/0587(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 硼酸, 产气, 析气, 产生, 析出, 气体, 电解液, 电解质, LiB+, gas, electrolyte

### C. DOCUMENTS CONSIDERED TO BE RELEVANT

| Category* | Citation of document, with indication, where appropriate, of the relevant passages | Relevant to claim No. |
|---|---|---|
| X | CN 114373999 A (PRIME PLANET ENERGY & SOLUTIONS, INC.) 19 April 2022 (2022-04-19)<br>    description, pp. 2-6 | 1-13 |
| X | CN 112701350 A (NINGDE GUOTAI HUARONG NEW MATERIAL CO., LTD.) 23 April 2021 (2021-04-23)<br>    description, paragraphs 3-18 | 1-13 |
| X | CN 112909334 A (NINGDE GUOTAI HUARONG NEW MATERIAL CO., LTD.) 04 June 2021 (2021-06-04)<br>    description, paragraphs 5-24 | 1-13 |
| A | WO 2018088743 A1 (SAMSUNG SDI CO., LTD.) 17 May 2018 (2018-05-17)<br>    entire document | 1-13 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 November 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/106071**

| Patent document cited in search report | | | Publication date (day/month/year) | Patent family member(s) | | | Publication date (day/month/year) |
|---|---|---|---|---|---|---|---|
| CN | 114373999 | A | 19 April 2022 | US | 2022123379 | A1 | 21 April 2022 |
| | | | | JP | 2022065393 | A | 27 April 2022 |
| CN | 112701350 | A | 23 April 2021 | None | | | |
| CN | 112909334 | A | 04 June 2021 | None | | | |
| WO | 2018088743 | A1 | 17 May 2018 | KR | 20180051207 | A | 16 May 2018 |

Form PCT/ISA/210 (patent family annex) (January 2015)